# FASCICULE DE BREVET EUROPEEN

(11) **EP 1 127 909 B1**
(45) Date de publication et mention de la délivrance du brevet: **09.03.2005**
(21) Numéro de dépôt: 01103961.7
(22) Date de dépôt: 19.02.2001
(51) Int. Cl.: C08G 81/02, C08L 71/02, C08K 3/36, B60C 1/00

(54) **Composition de caoutchouc vulcanisable, utilisable pour fabriquer un pneumatique, et pneumatique comprenant cette composition**
Vulkanisierbare Kautschukmischung zur Herstellung eines Luftreifens und Luftreifen, der eine solche Zusammensetzung enthält
Composition of curable rubber, suitable to produce a tire and tire containing this composition

(30) Priorité: 24.02.2000 FR 0002367
(43) Date de publication de la demande: 29.08.2001
(73) Titulaire: Société de Technologie Michelin, 63000 Clermont-Ferrand Cedex 09 (FR); MICHELIN RECHERCHE ET TECHNIQUE S.A., CH-1763 Granges-Paccot (CH)
(72) Inventeur: Robert, Pierre, 63170 Perignat-Les-Sarliève (FR); Cabioch, Jean-Luc, 63119 Chateaugay (FR); Favrot, Jean-Michel, 63800 Cournon-d'Auvergne (FR)
(74) Mandataire: Hiebel, Robert

(56) Documents cités:
- EP-A- 0 299 074
- EP-A- 0 580 991
- EP-A- 0 676 265
- EP-A- 0 855 423
- FR-A- 2 195 641
- US-A- 5 336 722

## Description

La présente invention concerne une composition de caoutchouc vulcanisable qui est notamment destinée à la fabrication d'enveloppes de pneumatiques, et une enveloppe de pneumatique dont la bande de roulement comprend une telle composition, qui présentent des propriétés hystérétiques et physiques améliorées à l'état vulcanisé, tout en conservant des propriétés de mise en oeuvre satisfaisantes à l'état non vulcanisé

Depuis que les économies de carburant et la nécessité de préserver l'environnement sont devenues une priorité, il est souhaitable de produire des mélanges possédant de bonnes propriétés mécaniques et une hystérèse aussi faible que possible afin de pouvoir les mettre en oeuvre sous forme de compositions de caoutchouc utilisables pour la fabrication de divers produits semi-finis entrant dans la composition d'enveloppes de pneumatique, tels que par exemple des sous-couches, des flancs, des bandes de roulement, et afin d'obtenir des pneumatiques possédant une résistance au roulement réduite.

Pour atteindre un tel objectif, de nombreuses solutions ont été proposées consistant notamment à modifier la structure des polymères et des copolymères diéniques en fin de polymérisation au moyen d'agents de fonctionnalisation, de couplage ou d'étoilage. La très grande majorité de ces solutions s'est concentrée sur l'utilisation de polymères fonctionnalisés qui sont actifs vis-à-vis du noir de carbone, dans le but d'obtenir une bonne interaction entre le polymère ainsi modifié et le noir de carbone.

A titre d'illustration de cet art antérieur relatif à des charges renforçantes constituées de noir de carbone, on peut par exemple citer le document de brevet américain US-A- 3 135 716, qui décrit la réaction de polymères diéniques vivants en fin de chaîne avec un agent de couplage organique polyfonctionnel pour obtenir des polymères aux propriétés améliorées. On peut également citer le document de brevet américain US-A-3 244 664, qui divulgue l'utilisation de tétra alcoxysilanes, à titre d'agent de couplage ou d'étoilage de polymères diéniques.

L'utilisation de silice à titre de charge renforçante dans des compositions de caoutchouc vulcanisables, notamment destinées à entrer dans la constitution de bandes de roulement de pneumatique, est ancien. Cependant, cette utilisation est restée très limitée, en raison du niveau insatisfaisant de certaines propriétés physiques de telles compositions, notamment la résistance à l'abrasion.

C'est la raison pour laquelle il a été proposé d'utiliser, pour pallier ces inconvénients, des polymères diéniques fonctionnalisés à la place des polymères non fonctionnalisés qui étaient antérieurement utilisés, et en particulier des polymères fonctionnalisés par des dérivés alcoxysilanes, tels que des tétra éthoxysilanes. On peut par exemple citer le document de brevet américain US-A-5 066 721, qui décrit une composition de caoutchouc comprenant un polymère diénique fonctionnalisé par un alcoxysilane ayant au moins un reste alcoxyle non hydrolysable, ce qui permet l'élimination du solvant de polymérisation par un stripping à la vapeur d'eau.

Un inconvénient de ces réactions de fonctionnalisation réside dans les réactions de couplage qui les accompagnent, ce qui impose généralement d'utiliser un excès d'alcoxysilane et/ou un mélangeage intense, pour minimiser ces réactions de couplage.

Un autre inconvénient de ces réactions réside dans la mise en oeuvre ultérieure de l'opération de stripping à la vapeur d'eau, qui est nécessaire pour éliminer le solvant de polymérisation.

En effet, d'une manière générale, l'expérience montre que les polymères fonctionnalisés obtenus subissent des évolutions de macrostructure lors de cette opération de stripping, ce qui conduit à une sévère dégradation de leurs propriétés, à moins de se limiter à utiliser à titre d'agent de fonctionnalisation un alcoxysilane appartenant à une famille restreinte, telle que celle qui est décrite dans le document précité US-A-5 066 721.

Par conséquent, il ressort de ce qui précède que l'utilisation de polymères diéniques comprenant une fonction alcoxysilane pour obtenir des compositions de caoutchouc comprenant de la silice à titre de charge renforçante n'est pas satisfaisante, en dépit des propriétés physiques améliorées de ces compositions.

C'est la raison pour laquelle des recherches ont été menées sur d'autres réactions de fonctionnalisation, toujours en vue de l'obtention de telles compositions de caoutchouc.

A titre d'exemple, on peut citer le document de brevet français FR-A-2 740 778 au nom de la demanderesse, qui divulgue l'utilisation de polymères diéniques portant en extrémité de chaîne une fonction silanol ou un bloc polysiloxane ayant une extrémité silanol. On utilise par exemple un agent de fonctionnalisation constitué d'un polysiloxane cyclique, tel que l'hexaméthylcyclotrisiloxane. Les polymères fonctionnalisés obtenus peuvent être séparés du milieu réactionnel conduisant à leur formation par extraction à la vapeur d'eau du solvant, sans que leur macrostructure et, par conséquent, leurs propriétés physiques n'évoluent.

Ces polymères fonctionnalisés sont destinés à être incorporés à des compositions vulcanisées comprenant à titre de charge renforçante de la silice à titre majoritaire, par exemple comprenant un coupage de silice et de noir de carbone. On a pu établir que ces polymères confèrent des propriétés de caoutchouterie, notamment hystérétiques et de renforcement à l'état vulcanisé, qui sont améliorées par rapport à celles de compositions témoin à base de polymères diéniques non fonctionnalisés, et qui sont au moins analogues à celles de compositions à base de polymères diéniques comprenant une fonction alcoxysilane.

Cependant, il se trouve que cette amélioration à l'état vulcanisé des propriétés d'hystérèse et de renforcement s'accompagne, à l'état non vulcanisé, d'une augmentation de la viscosité Mooney des compositions testées par rapport auxdites compositions témoin, c'est-à-dire d'une aptitude à la mise en oeuvre réduite.

Le but de la présente invention est de remédier à cet état de fait, et il est atteint en ce que la demanderesse vient de découvrir de façon surprenante qu'une composition de caoutchouc comprenant une charge blanche renforçante et comprenant au moins un copolymère diénique à blocs qui est destiné à interagir avec ladite charge blanche renforçante et qui comprend à l'une au moins de ses extrémités de chaîne un bloc polyéther dont la masse moléculaire est sensiblement comprise entre 1000 g/mol et 3000 g/mol, ledit bloc polyéther répondant à la formule suivante:

(i) O-(CH₂-CH₂-O)ₙ-R,

où n est un entier naturel non nul et R est un groupe hydrocarboné saturé ou non,
conduit à des propriétés hystérétiques aux petites et aux grandes déformations qui sont comparables à celles atteintes avec les polymères diéniques fonctionnalisés précédemment cités, tout en conduisant à des propriétés de mise en oeuvre à l'état non vulcanisé qui sont particulièrement avantageuses, car proches de celles obtenues avec une composition à base d'un polymère diénique non fonctionnalisé.

Ce copolymère diénique à blocs peut être obtenu de plusieurs manières. On peut l'obtenir par polymérisation séquencée ou par réaction de greffage. Dans ce dernier cas, le copolymère diénique à blocs est obtenu par réaction d'un premier réactif, constitué d'un polymère diénique comprenant un groupe halogénosilane en extrémité de chaîne, avec un second réactif, constitué d'un polyéther comprenant au moins un radical hydroxy en extrémité de chaîne.

Cette réaction est mise en oeuvre en présence d'une amine tertiaire, par exemple la diméthylaminopyridine, et elle peut être mise en oeuvre en dispersion ou en solution. De plus, elle peut être réalisée en continu ou en discontinu.

Le premier bloc diénique qui est obtenu peut être par exemple statistique, séquencé ou microséquencé.

Par ailleurs, ce premier bloc diénique peut avoir toute microstructure appropriée, qui est fonction des conditions particulières de mise en oeuvre de cette réaction, telles que la présence ou non d'un agent modifiant et/ou randomisant et les quantités d'agent modifiant et/ou randomisant employées.

*A titre de premier bloc diénique, on entend tout homopolymère obtenu par polymérisation d'un monomère diène conjugué ayant 4 à 12 atomes de carbone, ou tout copolymère obtenu par copolymérisation d'un ou plusieurs diènes conjugués entre eux ou avec un ou plusieurs composés vinylaromatiques ayant de 8 à 20 atomes de carbone. Dans le cas de copolymères, ceux-ci contiennent de 20 % à 99 % en poids d'unités diéniques, et de 1 à 80 % en poids d'unités vinylaromatiques.

A titre de diènes conjugués conviennent notamment, le 1, 3-butadiène, le 2-méthyl 1, 3-butadiène, les 2, 3-di (alcoyle en C1 à C5) 1, 3-butadiène tels que par exemple le 2, 3 diméthyl-1, 3-butadiène, le 2, 3-diéthyl-1, 3-butadiène, le 2-méthyl 3-éthyl 1, 3-butadiène, le 2-méthyl 3-isopropyl 1, 3-butadiène, le phényl 1, 3-butadiène, le 1, 3-pentadiène, le 2, 4-hexadiène.

A titre de composés vinylaromatiques conviennent notamment le styrène, l'ortho-, para-, ou meta-méthylstyrène, le mélange commercial "vinyl toluène", le paratertiobutylstyrène, les méthoxystyrènes, le vinylmésitylène, le divinylbenzène, le vinylnaphtalène.

A titre préférentiel pour ce premier bloc diénique, conviennent:
- les polybutadiènes, en particulier ceux ayant une teneur massique en unités 1, 2 allant de 4 % à 80 %,
- les polyisoprènes dont le taux en unités vinyliques est inférieur à 80 %,
- les copolymères de butadiène-styrène, en particulier ceux ayant, d'une part, une teneur massique en styrène allant de 4 % à 50 % et plus particulièrement de 20 % à 40 % et, d'autre part, des teneurs massiques en liaisons 1, 2 et trans 1, 4 allant respectivement de 4 % à 65 % et de 30 % à 80 %,
- les copolymères de butadiène-isoprène, notamment ceux ayant une teneur massique en isoprène allant de 5 % à 90 % et une température de transition vitreuse (Tg) allant de -80 C à -20° C,
- les copolymères isoprène-styrène, notamment ceux ayant une teneur massique en styrène allant de 5 % à 50 % et un taux en unités vinyliques qui est inférieur à 90 %,
- les terpolymères de butadiène-styrène-isoprène, notamment ceux ayant une teneur massique en styrène allant de 5 % à 50 % et plus particulièrement allant de 10 % à 40 %, une teneur massique en isoprène allant de 15 % à 60 % et plus particulièrement allant de 20 % à 50 %, une teneur massique en butadiène allant de 5 % à 50 % et plus particulièrement allant de 20 % et 40 %, une teneur massique en unités 1, 2 de la partie butadiénique allant de 4 % à 85 %, une teneur massique en unités trans 1, 4 de la partie butadiénique allant de 6 % à 80 %, une teneur massique en unités 1, 2 et 3, 4 de la partie isoprénique allant de 5 % à 70 %, et une teneur massique en unités trans 1, 4 de la partie isoprénique allant de 10 % à 50 %.

Le polymère diénique constituant ledit premier réactif peut être obtenu par réaction d'un polymère diénique vivant avec un dihalogéno dialkyl silane. Selon un mode préférentiel de réalisation de l'invention, ce premier réactif est obtenu, dans un premier temps, par réaction d'un polymère diénique vivant avec un organosiloxane cyclique (comme décrit dans le document de brevet FR-A-2 740 778) pour obtenir un polymère ayant une extrémité silanolate de lithium puis, dans un second temps, par réaction de ce dernier polymère avec un dialkyl dihalogéno silane.

On notera que ce procédé d'obtention dudit premier réactif présente l'avantage de diminuer le taux de polymère couplé.

Concernant le polymère vivant utilisé pour le premier temps précité, il est obtenu par voie anionique au moyen d'un initiateur organométallique monofonctionnel ou difonctionnel, suivant que l'on souhaite obtenir, pour le copolymère à blocs de l'invention, un bloc polyéther à une seule ou à chacune des deux extrémités de chaîne, respectivement. Cet initiateur est par exemple constitué d'un alkyl lithium, de préférence le n-butyl lithium, ou d'un amidure de lithium.

* A titre de second réactif, ledit polyéther est tel que l'une de ses extrémités de chaîne est pourvue d'un groupe hydroxy, son autre extrémité de chaîne étant pourvue d'un groupe alkyle ou d'un groupe aryle, en vue d'obtenir pour ledit copolymère à blocs un bloc polyéther répondant à ladite formule (i).

De préférence, l'extrémité de chaîne dudit polyéther autre que celle pourvue d'un groupe hydroxy est pourvue d'un groupe alkyle.

Une composition de caoutchouc selon l'invention est obtenue par mélangeage au moyen d'un travail thermo-mécanique du copolymère à blocs obtenu, d'une part, avec une charge blanche renforçante présente à titre majoritaire dans la charge renforçante utilisée et, d'autre part, avec des additifs appropriés pour l'obtention d'une composition de caoutchouc vulcanisable.

Selon des variantes de réalisation pour l'obtention de cette composition selon l'invention, on utilise ledit copolymère à blocs en coupage avec un ou plusieurs autres élastomères conventionnellement utilisés dans les enveloppes de pneumatiques, tels que du caoutchouc naturel ou un coupage à base de caoutchouc naturel et d'un élastomère synthétique, ou encore d'un autre élastomère diénique éventuellement couplé et/ou étoilé, ou encore partiellement ou entièrement fonctionnalisé par un bloc autre qu'un bloc polyéther répondant à ladite formule (i).

On notera que l'amélioration des propriétés de la composition de caoutchouc selon l'invention sera d'autant plus élevée, que la proportion dudit ou desdits élastomères conventionnels dans la composition selon l'invention sera plus réduite. Avantageusement, cet ou ces élastomères conventionnels pourront le cas échéant être présents dans la composition selon l'invention selon une quantité allant de 1 à 70 parties en poids pour 100 parties en poids de copolymère élastomère comprenant au moins un bloc polyéther selon l'invention.

Dans la présente demande, on entend par "charge blanche renforçante" une charge "blanche" (i.e., inorganique, en particulier minérale), parfois aussi appelée charge "claire", capable de renforcer à elle seule, sans autre moyen qu'un système de couplage intermédiaire, une composition de caoutchouc destinée à la fabrication de pneumatiques, en d'autres termes capable de remplacer dans sa fonction de renforcement une charge conventionnelle de noir de carbone de grade pneumatique.

Préférentiellement, la charge blanche renforçante est, en totalité ou tout du moins majoritairement, de la silice (SiO₂). La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, même si les silices précipitées hautement dispersibles sont préférées.

Dans le présent exposé, la surface spécifique BET est déterminée de manière connue, selon la méthode de Brunauer-Emmet-Teller décrite dans "The Journal of the American Chemical Society" Vol. 60, page 309, février 1938 et correspondant à la norme AFNOR-NFT-45007 (novembre 1987); la surface spécifique CTAB est la surface externe déterminée selon la même norme AFNOR-NFT-45007 de novembre 1987.

Par silice hautement dispersible, on entend toute silice ayant une aptitude très importante à la désagglomération et à la dispersion dans une matrice élastomérique, observable de manière connue par microscopie électronique ou optique, sur coupes fines. Comme exemples non limitatifs de telles silices hautement dispersibles préférentielles, on peut citer la silice Perkasil KS 430 de la société Akzo, la silice BV 3380 de la société Degussa, les silices Zeosil 1165 MP et 1115 MP de la société Rhodia, la silice Hi-Sil 2000 de la société PPG, les silices Zeopol 8741 ou 8745 de la Société Huber, des silices précipitées traitées telles que par exemple les silices "dopées" à l'aluminium décrites dans la demande EP-A-0 735 088.

L'état physique sous lequel se présente la charge blanche renforçante est indifférent, que ce soit sous forme de poudre, de microperles, de granulés, ou encore de billes. Bien entendu on entend également par charge blanche renforçante des mélanges de différentes charges blanches renforçantes, en particulier de silices hautement dispersibles telles que décrites ci-dessus.

Selon un exemple préférentiel de réalisation de l'invention, la charge renforçante de la composition de caoutchouc comprend une charge blanche renforçante à titre majoritaire (c'est-à-dire avec une fraction massique de charge blanche renforçante dans ladite charge renforçante qui est supérieure à 50 %).

La charge renforçante d'une composition de caoutchouc selon l'invention peut ainsi contenir en coupage (mélange), en plus de la ou des charges blanches renforçantes précitées, du noir de carbone à titre minoritaire (c'est-à-dire selon une fraction massique qui est inférieure à 50 %). Comme noirs de carbone conviennent tous les noirs de carbone, notamment les noirs du type HAF, ISAF, SAF, conventionnellement utilisés dans les pneumatiques et particulièrement dans les bandes de roulement des pneumatiques. A titre d'exemples non limitatifs de tels noirs, on peut citer les noirs N115, N134, N234, N339, N347, N375.

Par exemple, les coupages noir/ silice ou les noirs partiellement ou intégralement recouverts de silice conviennent pour constituer la charge renforçante. Conviennent également les noirs de carbone modifiés par de la silice tels que, à titre non limitatif, les charges qui sont commercialisées par la société CABOT sous la dénomination « CRX 2000 », et qui sont décrites dans le document de brevet international WO-A-96/37547.

Dans le cas où la charge renforçante ne contient qu'une charge blanche renforçante et du noir de carbone, la fraction massique de ce noir de carbone dans ladite charge renforçante est préférentiellement choisie inférieure ou égale à 30 %.

Cependant, l'expérience montre que les propriétés précitées de la composition selon l'invention sont d'autant plus améliorées, que la charge renforçante qu'elle comprend contient une fraction massique plus élévée en charge blanche renforçante, et que lesdites propriétés sont optimales lorsque ladite composition contient uniquement une charge blanche renforçante, par exemple de la silice, à titre de charge renforçante. Ce dernier cas constitue donc un exemple préférentiel de composition de caoutchouc selon l'invention.

La composition de caoutchouc selon l'invention comprend en outre de manière classique, un agent de liaison charge blanche renforçante / matrice élastomère (encore appelé agent de couplage), qui a pour fonction d'assurer une liaison (ou couplage) suffisante, de nature chimique et/ou physique, entre ladite charge blanche et la matrice, tout en facilitant la dispersion de cette charge blanche au sein de ladite matrice.

Un tel agent de liaison, au moins bifonctionnel, a par exemple comme formule générale simplifiée « Y-T-X », dans laquelle:
- Y représente un groupe fonctionnel (fonction « Y ») qui est capable de se lier physiquement et/ou chimiquement à la charge blanche, une telle liaison pouvant être établie, par exemple, entre un atome de silicium de l'agent de couplage et les groupes hydroxyle (OH) de surface de la charge (par exemple les silanols de surface lorsqu'il s'agit de silice);
- X représente un groupe fonctionnel (« fonction X ») qui est capable de se lier physiquement et/ou chimiquement à l'élastomère, par exemple par l'intermédiaire d'un atome de soufre;
- T représente un groupe hydrocarboné permettant de relier Y et X.

Ces agents de liaison ne doivent en particulier pas être confondus avec de simples agents de recouvrement de la charge considérée lesquels, de manière connue, peuvent comporter la fonction Y active vis-à-vis de la charge, mais sont dépourvus de la fonction X active vis-à-vis de l'élastomère.

De tels agents de liaison, d'efficacité variable, ont été décrits dans un très grand nombre de documents et sont bien connus de l'homme du métier. On peut utiliser en fait tout agent de liaison connu pour ou susceptible d'assurer efficacement, dans les compositions de caoutchouc diénique utilisables pour la fabrication de pneumatiques, la liaison entre silice et élastomère diénique, tels que par exemple des organosilanes, notamment des alkoxysilanes polysulfurés ou des mercaptosilanes, ou des polyorganosiloxanes porteurs des fonctions X et Y précitées.

On utilise en particulier des alkoxysilanes polysulfurés, tels que décrits par exemple dans les documents de brevet US-A-3 842 111, US-A-3 873 489, US-A-3 978 103, US-A-3 997 581, US-A-4 002 594 ou, plus récemment, US-A-5 580 919, US-A-5 583 245, US-A-5 663 396, US-A-5 684 171, US-A-5 684 172, US-A-5 696 197, qui décrivent en détail de tels composés connus.

Conviennent en particulier pour la composition de l'invention, sans que la définition ci-après soit limitative, des alkoxysilanes polysulfurés dits « symétriques » répondant à la formule générale (I) suivante:

(I) Z - A - Sₙ - A - Z,

dans laquelle:
- n est un entier de 2 à 8;
- A est un radical hydrocarboné divalent;
- Z répond à l'une des formules ci-après: 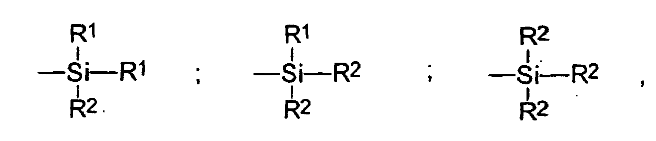
dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈;
- les radicaux R², substitués ou non substitués, identiques ou différents entre eux, représentent un groupe alkoxyle en C₁-C₁₈ ou cycloalkoxyle en C₅-C₁₈.

Dans la formule (I) ci-dessus, le nombre n est de préférence un nombre entier de 3 à 5.

Dans le cas d'un mélange d'alkoxysilanes polysulfurés répondant à la formule (I) ci-dessus, notamment des mélanges usuels disponibles commercialement, la valeur moyenne des "n" est un nombre fractionnaire, de préférence compris entre 3 et 5, plus préférentiellement proche de 4.

Le radical A, substitué ou non substitué, est de préférence un radical hydrocarboné divalent, saturé ou non saturé, comportant de 1 à 18 atomes de carbone. Conviennent notamment des groupements alkylène en C₁-C₁₈ ou des groupements arylène en C₆-C₁₂, plus particulièrement des alkylènes en C₁-C₁₀, notamment en C₂-C₄, en particulier le propylène.

Les radicaux R¹ sont préférentiellement des groupes alkyle en C₁-C₆, cyclohexyle ou phényle, notamment des groupes alkyle en C₁-C₄, plus particulièrement le méthyle et/ou l'éthyle.

Les radicaux R² sont préférentiellement des groupes alkoxyle en C₁-C₈ ou cycloalkoxyle en C₅-C₈, plus particulièrement le méthoxyle et/ou l'éthoxyle.

De tels alkoxysilanes polysulfurés dits "symétriques", ainsi que certains de leurs procédés d'obtention sont par exemple décrits dans les brevets récents US-A- 5 684 171 et US-A- 5 684 172 donnant une liste détaillée de ces composés connus, pour n variant de 2 à 8.

Préférentiellement, l'alkoxysilane polysulfuré mis en oeuvre dans l'invention est un polysulfure, en particulier un tétrasulfure, de bis(alkoxyl(C₁-C₄)silylpropyle), plus préférentiellement de bis(trialkoxyl(C₁-C₄)silylpropyle), notamment de bis(3-triéthoxysilylpropyle) ou de bis(3-triméthoxysilylpropyle).

A titre d'exemple particulièrement préférentiel, on utilise le tétrasulfure de bis(triéthoxysilylpropyle) ou TESPT, de formule [(C₂H₅O)₃Si(CH₂)₃S₂]₂, commercialisé par exemple par la société Degussa sous la dénomination Si69 (ou X50S lorsqu'il est supporté à 50% en poids sur du noir de carbone), ou encore par la société Witco sous la dénomination Silquest A1289 (dans les deux cas mélange commercial de polysulfures avec une valeur moyenne pour n qui est proche de 4).

L'homme du métier saura ajuster la teneur en agent de couplage dans les compositions de l'invention en fonction de l'application visée, de la matrice élastomère utilisée et de la quantité de charge blanche renforçante utilisée.

Dans les compositions de caoutchoucs conformes à l'invention, la teneur en agent de couplage peut être comprise dans un domaine de 0,5 à 15 % par rapport à la masse de charge blanche renforçante.

Bien entendu, l'agent de couplage pourrait être préalablement greffé (via la fonction "X") sur l'élastomère diénique de la composition de l'invention, l'élastomère ainsi fonctionnalisé ou "précouplé" comportant alors la fonction "Y" libre pour la charge blanche renforçante. Il pourrait également être préalablement greffé (via la fonction "Y") sur la charge blanche renforçante, la charge ainsi "précouplée" pouvant ensuite être liée à l'élastomère diénique par l'intermédiaire de la fonction libre "X".

On préfère toutefois, notamment pour des raisons de meilleure mise en oeuvre des compositions à l'état non vulcanisé, utiliser l'agent de couplage, soit greffé sur la charge blanche renforçante, soit à l'état libre (i.e., non greffé).

Quant aux additifs précités qui sont utilisés dans cette composition, ils peuvent comprendre notamment des plastifiants, des pigments, des anti-oxydants, des cires anti-ozonantes, un système de vulcanisation à base soit de soufre et/ou de peroxyde et/ou de bismaléimides, des accélérateurs de vulcanisation, des huiles d'extension, un ou plusieurs agents de recouvrement de la silice tels que des alcoxysilanes, des polyols, ou des amines.

L'invention a également pour objet une bande de roulement d'enveloppe de pneumatique, qui est telle qu'elle comprend une composition de caoutchouc telle que celle susmentionnée.

En raison de l'hystérèse réduite qui caractérise une composition de caoutchouc selon l'invention à l'état vulcanisé, on notera qu'une enveloppe de pneumatique dont la bande de roulement comprend ladite composition présente une résistance au roulement avantageusement réduite.

Les caractéristiques précitées de la présente invention, ainsi que d'autres, seront mieux comprises à la lecture de la description suivante de plusieurs exemples de réalisation de l'invention, donnés à titre illustratif et non limitatif.

Dans les exemples qui suivent, les viscosités sont des viscosités inhérentes qui sont mesurées dans le toluène, à une concentration de 1 g/l.

### I. Exemple de préparation d'un copolymère à deux blocs styrène-butadiène, d'une part, et polyéther de masse moléculaire égale à 2000 g/mol, d'autre part:

Dans un réacteur de 10 litres contenant 5,8 litres de toluène, on injecte 231 grammes de styrène et 410 grammes de butadiène, ainsi que 2000 ppm de tétrahydrofurane (parties par million de THF). Après avoir neutralisé les impuretés dans la solution à polymériser par addition de n-BuLi, on ajoute 0,0032 mol de n-BuLi actif. La polymérisation est conduite à 40° C.

Lorsque le taux de conversion des monomères atteint 75 % ( taux atteint au bout de 30 minutes, avec une viscosité inhérente du milieu réactionnel alors égale à 1,40 dl/g), on injecte dans le réacteur 0,012 mol d'hexaméthylcyclotrisiloxane en solution dans 10 cm³ de toluène préalablement désaéré. On agite la solution ainsi obtenue pendant 30 minutes et à 40° C. On y ajoute ensuite 0,030 mol de dichlorodiméthylsilane, puis on agite à nouveau pendant 15 minutes et à 40° C la solution de polymère obtenue.

On y ajoute ensuite, en solution dans 50 cm³ de toluène désaéré, 90 grammes d'un polyéther constitué d'un polyéthyléneglycol anhydre comprenant, à l'une de ses extrémités de chaîne, un groupe méthyl et, à son autre extrémité de chaîne, un groupe hydroxy, ainsi que 0,005 mol de diméthylaminopyridine. On agite cette solution de polymère pendant une heure et à 60° C.

Ce polyéther, commercialisé par la société FLUKA, a été préalablement préparé par polymérisation anionique de l'oxyde d'éthylène, et il répond à la formule (i) précitée, R étant un groupe méthyl.

On stoppe la polymérisation et on traite le copolymère obtenu au moyen d'un antioxydant, respectivement par addition de 0,2 partie pour cent parties d'élastomère (pce) de 2,2'-méthylène bis (4-méthyl-6-tertiobutylphénol) et de 0,2 pce de N-(1,3-diméthylbutyl)-N'-phényl-p-phénylène diamine.

On récupère ensuite le copolymère à blocs obtenu par opération classique de stripping à la vapeur d'eau du solvant, puis on le sèche sur outil à 100° C pendant 10 minutes.

La viscosité inhérente du copolymère à blocs (dans le toluène) après stripping et séchage est de 1,50 dl/g et la viscosité Mooney ML (1+4, 100° C) est de 30.

L'analyse du copolymère à blocs par proche infra-rouge montre que le bloc SBR contient 26 % en poids de styrène. La fraction butadiénique contient quant à elle 41 % d'enchaînements vinyliques.

Une analyse par la technique de chromatographie d'exclusion par la taille (SEC) montre qu'il ne reste pas de polyéther libre.

La masse moléculaire en nombre (Mn) du copolymère à blocs, déterminée par osmométrie, est de 175 000 g/mol.

L'analyse par RMN ¹H du copolymère à blocs est effectuée sur un échantillon ayant subi trois séries de traitements, constituées chacune d'une coagulation dans le méthanol suivie d'une remise en solution dans le toluène. On a utilisé pour cette analyse RMN ¹H un appareil commercialisé sous la dénomination « BRUKER AC200 ».

On détermine pour ce copolymère à blocs, d'après, le nombre de motifs [-OCH₂CH₂-] pour 100 motifs styrène-butadiène, nombre qui est égal à 1,2, pour un déplacement chimique de 3,42 ppm. En prenant en compte ladite masse moléculaire en nombre (Mn) et celle du bloc polyéther (2000 g/mol), qui est mesurée par ladite technique SEC, il en résulte que le taux de copolymère comportant un bloc polyéther est d'environ 75 %.

### II. Exemples comparatifs de compositions de caoutchouc selon l'invention:

Dans les exemples qui suivent, les propriétés des compositions de l'invention sont évaluées comme suit:
- viscosité Mooney ML (1+4) à 100° C: mesurée selon la norme ASTM: D-1646, intitulée « Mooney » dans les tableaux,
- modules d'allongement à 300 % (MA 300), à 100 % (MA 100) et à 10 % (MA 10): mesures effectuées selon la norme ISO 37,
- pertes hystérétiques (PH): mesurées par rebond à 60° C en %. La déformation pour les pertes mesurées est de 40 %,
- dureté SHORE A: mesures effectuées selon la norme DIN 53505,
- Propriétés dynamiques en cisaillement: mesures en fonction de la déformation, effectuées à 10 Hertz avec une déformation crête-crête allant de 0,15 % à 50 %. La non-linéarité exprimée est la différence de module de cisaillement entre 0,15 % et 50 % de déformation en MPa. L'hystérèse est exprimée par la mesure de tan delta à 7 % de déformation et à 23° C selon la norme ASTM D2231-71 (réapprouvée en 1977).

### EXEMPLE II. 1

Dans cet exemple, on a étudié les contributions de trois élastomères « SBR A, SBR B, SBR C » respectivement à l'intérieur de compositions de caoutchouc A, B et C, de type bande de roulement pour pneumatique tourisme et avec uniquement de la silice à titre de charge renforçante. Ces trois élastomères présentent les caractéristiques suivantes:
- SBR A est un SBR témoin qui a été synthétisé conformément à l'exemple I selon l'invention, à l'exception du stoppage de la réaction de polymérisation qui a été réalisé à l'aide de méthanol,
- SBR B est un SBR qui présente une fonction diméthylsilanol, laquelle est obtenue par addition d'hexaméthylcyclotrisiloxane lorsque le taux de conversion des monomères atteint 70 % (on pourra se reporter au document de brevet français FR-A-2 740 778 pour une description de cette fonctionnalisation), et
- SBR C est un SBR fonctionnalisé selon l'invention dont la synthèse a été décrite dans l'exemple I.

La formulation utilisée pour chacune de ces trois compositions A, B et C est la suivante, en parties en poids pour cent parties d'élastomère (pce):

| | |
|---|---|
| Elastomère | 100 pce |
| Silice (1) | 80 pce |
| Huile aromatique (2) | 40 pce |
| Agent de liaison (3) | 6,4 pce |
| ZnO | 2,5 pce |
| Acide stéarique | 1,5 pce |
| Anti-oxydant(4) | 1,9 pce |
| Cire anti-ozonante (5) | 1,5 pce |
| Soufre | 1,1 pce |
| Sulfénamide (6) | 2 pce |
| Diphénylguanidine | 1,5 pce avec |

| | |
|---|---|
| (1) = silice ZEOSIL 1165 de Rhône-Poulenc, | |
| (2) = huile commercialisée sous la dénomination Enerflex 65, | |
| (3) = agent de liaison « Si69 Dégussa », | |
| (4) = N-(1,3-diméthylbutyl)n-N'-phényl-p-phénylènediamine | |
| (5) =cire « C32ST » | |
| (6) = N-cyclohexyl-2-benzothiazylsulfénamide | |

Chaque composition A, B, C est préparée selon la méthode décrite dans le document de brevet européen EP-A-501 227, étant précisé que l'on opère un travail thermo-mécanique en deux étapes qui durent respectivement 5 min et 4 min, pour une vitesse moyenne des palettes de 45 t/min, jusqu'à atteindre une température maximale de tombée identique de 160° C, tandis que l'étape d'incorporation du système vulcanisant est effectuée sur « l'homo-finisseur » à 30° C. La vulcanisation est effectuée à 150° C pendant 40 minutes.

Les résultats sont consignés dans le tableau 1.

**Tableau 1:**

| COMPOSITION | A | B | C |
|---|---|---|---|
| Propriétés de l'élastomère SBR | | | |
| ML (1+4) à 100° C | 30 | 30 | 29 |

| Propriétés à l'état non vulcanisé | | | |
|---|---|---|---|
| ML (1+4) à 100° C | 53 | 85 | 74 |

| Propriétés à l'état vulcanisé | | | |
|---|---|---|---|
| Shore | 65,6 | 58,4 | 59,4 |
| MA 10 | 5,52 | 3,66 | 3,76 |
| MA 100 | 1,74 | 1,62 | 1,87 |
| MA 300 | 1,99 | 2,34 | 2,64 |
| MA 300 / MA 100 | 1,14 | 1,44 | 1,41 |
| Pertes PH (60° C, déf 35 %) | 33,0 | 21,3 | 19,2 |

| Propriétés dynamiques en fonction de la déformation | | | |
|---|---|---|---|
| Delta G^{*}23° C | 4,03 | 1,16 | 1,13 |
| tan ₘₐₓ 23° C | 0,352 | 0,229 | 0,232 |

On en déduit qu'en mélange silice et concernant les propriétés à l'état vulcanisé, le SBR C selon l'invention confère à la composition C des propriétés de renforcement qui sont supérieures à celles obtenues avec le SBR témoin A. Il en est de même pour la composition B comprenant le SBR B, en comparaison dudit SBR A.

De plus, on notera que les propriétés hystérétiques à faibles et fortes déformations de la composition C selon l'invention sont, d'une part, nettement améliorées par rapport à celles de la composition témoin A et, d'autre part, sont voisines de celles de la composition B.

Concernant l'état non vulcanisé, on notera que la composition C de l'invention présente une viscosité Mooney qui est inférieure à celle de la composition B. Par conséquent, la composition C de l'invention présente une aptitude à la mise en oeuvre qui est améliorée par rapport à celle de la composition B à élastomère fonctionnalisé classique.

En d'autres termes, il apparaît que l'incorporation à une composition de caoutchouc d'un élastomère fonctionnalisé selon l'exemple I de l'invention, tel que le SBR C, permet d'obtenir pour cette composition des propriétés de caoutchouterie qui sont nettement améliorées par rapport à celles d'une composition à élastomère non fonctionnalisé, tel que le SBR A, tout en présentant une aptitude à la mise en oeuvre améliorée vis-à-vis d'une composition à élastomère fonctionnalisé classique, tel que le SBR B.

### EXEMPLE II.2:

Dans cet exemple, on a étudié à l'intérieur de compositions de caoutchouc D et E les contributions respectives de deux coupages, chacun étant constitué du SBR A selon l'exemple II. 1 et d'un polyéther tel que celui utilisé dans l'exemple I.

Pour chacune des compositions D et E, la formulation utilisée est la même que dans l'exemple II. 1, à l'exception des 100 pce d'élastomère qui sont remplacées:
- pour la composition D, par 99 pce dudit SBR A et 1 pce dudit polyéther, et
- pour la composition E, par 95 pce dudit SBR A et 5 pce dudit polyéther.

Pour chaque composition D, E, le mode de mélangeage est celui décrit à l'exemple II. 1, à ceci près que l'on introduit ledit polyéther dans le mélangeur interne en même temps que ledit SBR A. Les résultats obtenus pour ces deux compositions D et E sont comparés à ceux précédemment obtenus pour les compositions A, B et C, dans le tableau 2 ci-après.

**Tableau 2:**

| COMPOSITION | A | B | C | D | E |
|---|---|---|---|---|---|
| Propriétés de l'élastomère SBR | | | | | |
| ML (1+4) à 100° C | 30 | 30 | 29 | 30 | 30 |

| Propriétés à l'état non vulcanisé | | | | | |
|---|---|---|---|---|---|
| ML (1+4) à 100° C | 53 | 85 | 74 | 53 | 43 |

| Propriétés à l'état vulcanisé | | | | | |
|---|---|---|---|---|---|
| Shore | 65,6 | 58,4 | 59,4 | 62,0 | 66,8 |
| MA 10 | 5,52 | 3,66 | 3,76 | 4,47 | 5,70 |
| MA 100 | 1,74 | 1,62 | 1,87 | 1,86 | 2,15 |
| MA 300 | 1,99 | 2,34 | 2,64 | 2,43 | 2,57 |
| MA 300 / MA 100 | 1,14 | 1,44 | 1,41 | 1,31 | 1,20 |
| Pertes PH (60° C, déf 35 %) | 33,0 | 21,3 | 19,2 | 26,9 | 27,9 |

| Propriétés dynamiques en fonction de la déformation | | | | | |
|---|---|---|---|---|---|
| Delta G^{*}23° C | 4,03 | 1,16 | 1,13 | 2,41 | 4,40 |
| tan ₘₐₓ 23° C | 0,352 | 0,229 | 0,232 | 0,294 | 0,340 |

On en déduit qu'en mélange silice, concernant les propriétés à l'état vulcanisé, le SBR C selon l'invention confère à la composition correspondante C des propriétés de renforcement qui sont supérieures à celles conférées par le SBR témoin A aux compositions A, D et E. Il en est de même pour la composition B comprenant le SBR B, en comparaison de ces mêmes compositions A, D et E.

De plus, on notera que les propriétés hystérétiques à faibles et fortes déformations de la composition C selon l'invention sont améliorées par rapport à celles de la composition témoin A et des compositions D et E. Il en est de même pour la composition B, en comparaison de ces mêmes compositions A, D et E.

On notera en particulier que la composition C selon l'invention et la composition B présentent chacune une hystérèse à basse déformation qui est notablement plus réduite que celle des solutions D et E.

Par ailleurs, on notera que l'incorporation à une composition de caoutchouc C d'un élastomère fonctionnalisé selon l'exemple I. 1 de l'invention, tel que le SBR C, permet d'obtenir pour cette composition C des propriétés de caoutchouterie qui sont proches de celles obtenues par incorporation à la composition B de l'élastomère SBR B à fonction diméthylsilanol, mais avec une aptitude à la mise en oeuvre améliorée vis-à-vis de ladite composition B.

Comme le montrent les résultats obtenus avec les compositions D et E, l'addition directe d'un polyéther à un SBR non fonctionnalisé, tel que le SBR A, ne permet pas d'obtenir ce résultat, et ce quelle que soit la fraction pondérale utilisée pour cette addition.

On notera en outre que la composition D, qui présente des propriétés de caoutchouterie, et par conséquent, une aptitude à la mise en oeuvre analogue à celle de la composition témoin A, se différencie de cette dernière,
- par des pertes hystérétiques inférieures à celles de la composition A, et
- par un rapport MA 300 / MA 100 supérieur à celui de cette composition A.

## Revendications

1. Composition de caoutchouc vulcanisable qui est utilisable pour la fabrication d'une enveloppe de pneumatique, ladite composition comprenant une charge blanche renforçante, **caractérisée en ce qu'**elle comprend au moins un copolymère diénique à blocs qui est destiné à interagir avec ladite charge blanche renforçante et qui comprend à l'une au moins de ses extrémités de chaîne un bloc polyéther dont la masse moléculaire est sensiblement comprise entre 1000 g/mol et 3000 g/mol, ledit bloc polyéther répondant à la formule suivante:
(i) O-(CH₂-CH₂-O)ₙ-R,
où n est un entier naturel non nul et R est un groupe hydrocarboné saturé ou non.

2. Composition de caoutchouc selon la revendication 1, **caractérisée en ce que** R est un groupe alkyl dans ledit ou chaque bloc polyéther.

3. Composition de caoutchouc selon la revendication 1 ou 2, **caractérisée en ce qu'**elle comprend majoritairement ladite charge blanche renforçante à titre de charge renforçante, de telle manière que la fraction massique de ladite charge blanche renforçante dans ladite charge renforçante soit supérieure à 50 %.

4. Composition de caoutchouc selon une des revendications 1 à 3, **caractérisée en ce que** ladite charge renforçante est constituée par ladite charge blanche renforçante, telle que de la silice.

5. Composition de caoutchouc selon une des revendications 1 à 3, **caractérisée en ce que** ladite charge renforçante comprend également du noir de carbone à titre minoritaire, de telle manière que la fraction massique dans ladite charge renforçante de ce noir de carbone soit inférieure ou égale à 30 %.

6. Composition de caoutchouc selon une des revendications précédentes, **caractérisée en ce que** ledit ou chaque copolymère à blocs comprend des enchaînements styrène-butadiène.

7. Composition de caoutchouc selon une des revendications 1 à 6, **caractérisée en ce qu'**elle comprend, en coupage avec ledit copolymère à blocs et dans une quantité allant de 1 à 70 parties en poids pour 100 parties en poids dudit copolymère à blocs, du caoutchouc naturel.

8. Composition de caoutchouc selon une des revendications 1 à 6, **caractérisée en ce qu'**elle comprend, en coupage avec ledit copolymère à blocs et dans une quantité allant de 1 à 70 parties en poids pour 100 parties en poids dudit copolymère à blocs, un élastomère synthétique et/ou un élastomère diénique couplé et/ou étoilé.

9. Procédé de préparation d'une composition de caoutchouc selon une des revendications précédentes, **caractérisé en ce qu**'il consiste,
- dans une première étape, à faire réagir un premier réactif, constitué d'un polymère diénique comprenant un groupe halogénosilane en extrémité de chaîne, avec un second réactif constitué d'un polyéther comprenant au moins un radical hydroxy en extrémité de chaîne, pour l'obtention dudit copolymère à blocs comprenant à l'une au moins de ses extrémités de chaîne ledit bloc polyéther, et
- dans une seconde étape, à procéder au mélangeage par travail thermo-mécanique dudit copolymère à blocs avec une charge blanche renforçante, à titre de charge renforçante majoritaire, et avec les additifs usuels pour l'obtention d'une composition de caoutchouc vulcanisable.

10. Procédé de préparation selon la revendication 9, **caractérisé en ce qu'**il consiste à mettre en oeuvre ladite première étape en présence d'une amine tertiaire.

11. Procédé de préparation selon la revendication 10, **caractérisé en ce qu'**il consiste à utiliser la diméthylaminopyridine à titre d'amine tertiaire.

12. Procédé de préparation selon une des revendications 9 à 11, **caractérisé en ce qu'**il consiste à faire réagir un polymère diénique vivant avec un dihalogéno dialkyl silane pour obtenir ledit premier réactif.

13. Procédé de préparation selon la revendication 12, **caractérisé en ce qu'**il consiste à préparer ledit premier réactif, dans un premier temps, par réaction d'un polymère diénique vivant avec un organosiloxane cyclique pour obtenir un polymère ayant une extrémité silanolate de lithium puis, dans un second temps, par réaction de ce dernier polymère avec un dialkyl dihalogéno silane.

14. Procédé de préparation selon une des revendications 9 à 13, **caractérisé en ce qu**'il consiste à préparer ledit polymère vivant au moyen d'un initiateur constitué d'un alkyl lithium ou d'un amidure de lithium.

15. Enveloppe de pneumatique, **caractérisée en ce qu'**elle comporte une bande de roulement comprenant une composition de caoutchouc selon une des revendications 1 à 8.

## Claims

1. A vulcanisable rubber composition which can be used for the manufacture of a tyre, said composition comprising a reinforcing white filler, **characterised in that** it comprises at least one diene block copolymer which is intended to interact with said reinforcing white filler and which comprises at at least one of its chain ends a polyether block, the molecular weight of which is substantially between 1000 g/mol and 3000 g/mol, said polyether block corresponding to the following formula:
(i) O-(CH₂-CH₂-O)ₙ-R,
in which n is a natural integer other than zero and R is a hydrocarbon group, whether saturated or not.

2. A rubber composition according to Claim 1, **characterised in that** R is an alkyl group in said or each polyether block.

3. A rubber composition according to Claim 1 or 2, **characterised in that** it comprises a majority proportion of said reinforcing white filler as reinforcing filler, such that the mass fraction of said reinforcing white filler in said reinforcing filler is greater than 50%.

4. A rubber composition according to one of Claims 1 to 3, **characterised in that** said reinforcing filler is formed by said reinforcing white filler, such as silica.

5. A rubber composition according to one of Claims 1 to 3, **characterised in that** said reinforcing filler also comprises carbon black in a minority proportion, such that the mass fraction of this carbon black in said reinforcing filler is less than or equal to 30%.

6. A rubber composition according to one of the preceding claims, **characterised in that** said or each block copolymer comprises styrene/butadiene units.

7. A rubber composition according to one of Claims 1 to 6, **characterised in that** it comprises, in a blend with said block copolymer and in a quantity from 1 to 70 parts by weight per 100 parts by weight of said block copolymer, natural rubber.

8. A rubber composition according to one of Claims 1 to 6, **characterised in that** it comprises, in a blend with said block copolymer and in a quantity from 1 to 70 parts by weight per 100 parts by weight of said block copolymer, a synthetic elastomer and/or a coupled and/or starred diene elastomer.

9. A process for the preparation of a rubber composition according to one of the preceding claims, **characterised in that** it consists,
- in a first step, of reacting a first reagent, formed of a diene polymer comprising a halosilane group at the chain end, with a second reagent, formed of a polyether comprising at least one hydroxyl radical at the chain end, for obtaining said block copolymer comprising at at least one of its chain ends said polyether block, and
- in a second stage, of mixing, by thermomechanical working, said block copolymer with a reinforcing white filler, as majority reinforcing filler, and with the conventional additives for obtaining a vulcanisable rubber composition.

10. A preparation process according to Claim 9, **characterised in that** it consists of implementing said first stage in the presence of a tertiary amine.

11. A preparation process according to Claim 10, **characterised in that** it consists of using dimethylaminopyridine as tertiary amine.

12. A preparation process according to one of Claims 9 to 11, **characterised in that** it consists of reacting a living diene polymer with a dihalodialkylsilane in order to obtain said first reagent.

13. A preparation process according to Claim 12, **characterised in that** it consists in preparing said first reagent, in a first stage, by reacting a living diene polymer with a cyclic organosiloxane to obtain a polymer having a lithium silanolate end, then, in a second stage, by reacting the latter polymer with a dialkyldihalosilane.

14. A preparation process according to one of Claims 9 to 13, **characterised in that** it consists in preparing said living polymer by means of an initiator formed of an alkyllithium or a lithium amide.

15. A tyre, **characterised in that** it comprises a tread containing a rubber composition according to one of Claims 1 to 8.

## Patentansprüche

1. Vulkanisierbare Kautschukmischung, die für die Herstellung eines Luftreifens verwendbar ist, wobei die Zusammensetzung einen hellen verstärkenden Füllstoff enthält, **dadurch gekennzeichnet, dass** sie mindestens ein Dienblockcopolymer enthält, das dazu vorgesehen ist, mit dem verstärkenden hellen Füllstoff zu wechselwirken, und das an mindestens einem Kettenende einen Polyetherblock aufweist, dessen Molmasse in etwa im Bereich von 1000 bis 3000 g/mol liegt, wobei der Polyetherblock der folgenden Formel entspricht:
O-(CH₂-CH₂-O)ₙ-R,
worin n eine von Null verschiedene, natürliche Zahl ist und R eine gesättigte oder ungesättigte Kohlenwasserstoffgruppe bedeutet.

2. Kautschukmischung nach Anspruch 1, **dadurch gekennzeichnet, dass** in dem Polyetherblock oder jedem Polyetherblock R eine Alkylgruppe bedeutet.

3. Kautschukmischung nach einem der Ansprüche 1 oder 2, **dadurch gekennzeichnet, dass** sie als verstärkenden Füllstoff hauptsächlich den verstärkenden hellen Füllstoff in einer solchen Menge enthält, dass der Masseanteil des hellen verstärkenden Füllstoffs in dem verstärkenden Füllstoff über 50 % liegt.

4. Kautschukmischung nach einem der Ansprüche 1 bis 3, **dadurch gekennzeichnet, dass** der verstärkende Füllstoff aus einem hellen verstärkenden Füllstoff, beispielsweise aus Kieselsäure, besteht.

5. Kautschukmischung nach einem der Ansprüche 1 bis 3, **dadurch gekennzeichnet, dass** der verstärkende Füllstoff in einer kleineren Menge auch Ruß enthält, wobei die Menge so ist, dass der Masseanteil des Rußes in dem verstärkenden Füllstoff höchstens 30 % beträgt.

6. Kautschukmischung nach einem der vorhergehenden Ansprüche, **dadurch gekennzeichnet, dass** das Blockcopolymer oder jedes Blockcopolymer Styrol-Butadien-Verknüpfungen aufweist.

7. Kautschukmischung nach einem der Ansprüche 1 bis 6, **dadurch gekennzeichnet, dass** sie im Verschnitt mit dem Blockcopolymer in einer Menge von 1 bis 70 Gewichtsteilen auf 100 Gewichtsteile des Blockcopolymers Naturkautschuk enthält.

8. Kautschukmischung nach einem der Ansprüche 1 bis 6, **dadurch gekennzeichnet, dass** sie im Verschnitt mit dem Blockcopolymer in einer Menge von 1 bis 70 Gewichtsteilen auf 100 Gewichtsteile des Blockcopolymers ein synthetisches Elastomer und/oder ein Dienelastomer, das gekuppelt und/oder sternförmig verzweigt ist, enthält.

9. Verfahren zur Herstellung einer Kautschukmischung nach einem der vorhergehenden Ansprüche, **dadurch gekennzeichnet, dass** es darin besteht,
- in einem ersten Schritt einen ersten Reaktanten, der aus einem Dienpolymer besteht, das an einem Kettenende eine Halogenosilanfunktion aufweist, mit einem zweiten Reaktanten umzusetzen, der aus einem Polyether besteht, der am Kettenende mindestens eine endständige Hydroxygruppe aufweist, um das Blockcopolymer zu erhalten, das an mindestens einem Kettenende den Polyetherblock aufweist, worauf
- in einem zweiten Schritt in einer thermo-mechanischen Verarbeitung das Blockcopolymer mit einem hellen verstärkenden Füllstoff als hauptsächlichem verstärkenden Füllstoff und mit Zusatzstoffen vermischt wird, die für die Herstellung einer vulkanisierbaren Kautschukmischung üblich sind.

10. Verfahren zur Herstellung nach Anspruch 9, **dadurch gekennzeichnet, dass** es darin besteht, den ersten Schritt in Gegenwart eines tertiären Amins durchzuführen.

11. Verfahren zur Herstellung nach Anspruch 10, **dadurch gekennzeichnet, dass** es darin besteht, als tertiäres Amin das Dimethylaminopyridin zu verwenden.

12. Verfahren zur Herstellung nach einem der Ansprüche 9 bis 11, **dadurch gekennzeichnet, dass** es darin besteht, zur Herstellung des ersten Reaktanten ein lebendes Dienpolymer mit einem Dihalogendialkylsilan umzusetzen.

13. Verfahren zur Herstellung nach Anspruch 12, **dadurch gekennzeichnet, dass** es darin besteht, den ersten Reaktanten in einem ersten Schritt durch Umsetzung eines cyclischen Organosiloxan mit einem lebenden Dienpolymer herzustellen, um ein Polymer zu erhalten, dass eine endständige Lithiumsilanolatgruppe aufweist, und dann in einem zweiten Schritt dieses Polymer mit einem Dialkyldihalogenosilan umzusetzen.

14. Verfahren zur Herstellung nach einem der Ansprüche 9 bis 13, **dadurch gekennzeichnet, dass** es darin besteht, das lebende Polymer mit einem Initiator herzustellen, bei dem es sich um eine Alkyllithiumverbindung oder ein Lithiumamid handelt.

15. Luftreifen, **dadurch gekennzeichnet, dass** er einen Laufstreifen umfasst, der eine Kautschukmischung nach einem der Ansprüche 1 bis 8 enthält.
